# EUROPÄISCHE PATENTANMELDUNG

(11) **EP 3 174 160 A1**
(43) Veröffentlichungstag der Anmeldung: **31.05.2017**
(21) Anmeldenummer: 15196946.6
(22) Anmeldetag: 30.11.2015
(51) Int. Cl.: H01R 4/70, H01R 13/52, H02G 15/115

(54) **ABDECKUNG UND VERFAHREN ZUR ABDECKUNG EINES ABSCHNITTS WENIGSTENS EINES ELEKTRISCHEN LEITERS**

(71) Anmelder: GE Energy Power Conversion Technology Ltd, Rugby Warwickshire CV21 1BU (GB)
(72) Erfinder: Kolbe, Thomas, 12277 Berlin (DE); Kamm, Jan, 12277 Berlin (DE); Bansemir, Martin, 12277 Berlin (DE)
(74) Vertreter: Rüger, Barthelt & Abel

(57) **Zusammenfassung**

Die Erfindung betrifft eine Abdeckung (10), um einen Längsabschnitt (11) wenigstens eines elektrischen Leiters (12, 13) zu umschließen und die Bildung eines Lichtbogens bzw. eines Überschlags zu vermeiden. Die Abdeckung (10) weist wenigstens zwei Abdeckungsteile (18) auf, die aus einem elektrisch isolierenden Material bestehen. Ein erstes Abdeckungsteil (18a) und ein zweites Abdeckungsteil (18b) haben jeweils wenigstens eine Durchführungsöffnung (23). Durch jede Durchführungsöffnung (23) wird ein elektrischer Leiter (12, 13) hindurchgeführt, so dass keine oder lediglich eine geringe Spaltöffnung (29) zwischen der Außenfläche (28) des Leiters (12, 13) und einer Umrandungswand (24) der Durchführungsöffnung (23) verbleibt. Die Abdeckung (10) hat außerdem wenigstens eine Verbindungsstelle (40, 41). An dieser Verbindungsstelle liegen zwei der vorhandenen Abdeckungsteile (18a, 18b bzw. 18a, 18c bzw. 18a, 18b) kraftschlüssig und/oder formschlüssig aneinander an und bilden eine zerstörungsfrei lösbare Verbindung. Dadurch ist die Zugänglichkeit zu dem geschützten Längsabschnitt (11) gewährleistet.

## Beschreibung

Die Erfindung betrifft eine Abdeckung sowie ein Verfahren zur Abdeckung wenigstens eines Abschnitts eines elektrischen Leiters. Mit der Abdeckung kann beispielsweise eine Verbindungsstelle zwischen zwei Leiterenden abgedeckt werden, an der die Leiter nicht elektrisch isoliert sind. Die Abdeckung ist insbesondere dazu eingerichtet, eine Lichtbogenbildung zu vermeiden, die von dem durch die Abdeckung abgedeckten Abschnitt des wenigstens einen elektrischen Leiters ausgehen oder zu diesem Abschnitt hinführen könnte.

Gehäuse und Abdeckungen für elektrische Leiter sind in vielfältigen Varianten bekannt. Beispielsweise beschreibt US 6 765 169 B2 eine Lichtbogenlöschkammer für Niederspannungsschaltgeräte. Die Lichtbogenlöschkammer ist in einem Gehäuse ausgebildet. Die Lichtbogenlöschkammer ist an einer Öffnung durch einen Deckel verschlossen. Der Deckel kann schraubenlos durch ineinander schiebbare Führungs- und Rastelemente an dem Gehäuse fixiert werden. Dadurch soll eine Verbindung zwischen dem Deckel und dem Gehäuse geschaffen werden, die das Austreten von ionisierten Schaltgasen und somit elektrische Überschläge verhindert.

Bei der vorliegenden Erfindung geht es darum, eine elektrisch nicht isolierte Stelle wenigstens eines Leiters, beispielsweise eine Verbindungsstelle zwischen zwei oder mehreren Leiterenden, auf einfache Weise gegen eine Lichtbogenbildung zu schützen.

Diese Aufgabe wird durch eine Abdeckung mit den Merkmalen des Patentanspruches 1 sowie durch ein Verfahren mit den Merkmalen des Patentanspruches 15 gelöst.

Die erfindungsgemäße Abdeckung ist dazu eingerichtet, einen Abschnitt wenigstens eines elektrischen Leiters und insbesondere eine Verbindungsstelle zwischen zwei oder mehreren Leiterenden zu umschließen und dadurch gegen eine Lichtbogenbildung zu anderen leitenden Bauteilen in der Umgebung zu schützen. Hierfür weist die Abdeckung wenigstens zwei Abdeckungsteile aus einem elektrisch isolierenden Material auf. Bevorzugt besteht die Abdeckung aus zwei oder drei separaten Abdeckungsteilen.

Ein erstes Abdeckungsteil weist wenigstens eine Durchführungsöffnung auf. Die Durchführungsöffnung ist dazu eingerichtet, einen elektrischen Leiter durch das erste Abdeckungsteil hindurchzuführen. Ein zweites Abdeckungsteil ist vorhanden, das ebenfalls wenigstens eine Durchführungsöffnung aufweist, die dazu eingerichtet ist, jeweils einen vorhandenen elektrischen Leiter hindurchzuführen. Zwischen dem ersten und dem zweiten Abdeckungsteil, in einem durch die Abdeckung abdeckbaren Längsabschnitt, können die jeweils hindurchgeführten Leiter elektrisch miteinander verbunden werden. Jede Durchführungsöffnung weist eine ringförmig geschlossene Umrandungswand auf. Zwischen der Umrandungswand und der Außenfläche des jeweils durchgeführten elektrischen Leiters verbleibt keine oder lediglich eine Spaltöffnung mit geringer Abmessung gemessen rechtwinklig zur Umrandungswand. Die verbleibende Spaltöffnung ist zumindest nicht größer als ein vorgegebenes maximales Querschnittsprofil. Das Querschnittsprofil ist vorzugsweise vordefiniert und entspricht einem Zünddraht mit einem vorgegebenen Querschnitt. Die verbleibende Spaltöffnung ist ausreichend klein, so dass der Zünddraht, der für eine genormte Prüfung vorgeschrieben ist, nicht durch die verbleibende Spaltöffnung und mithin zwischen der Außenfläche des hindurchgeführten elektrischen Leiters und der Umrandung hindurchgeführt werden kann.

Die Abdeckung hat wenigstens eine und bei einem bevorzugten Ausführungsbeispiel zwei Verbindungsstellen. An wenigstens einer der vorhandenen Verbindungsstellen sind zwei benachbarte Abdeckungsteile lösbar miteinander verbindbar. Die Verbindung kann zerstörungsfrei gelöst und wieder hergestellt werden. Vorzugsweise kann die Verbindung werkzeuglos gelöst und werkzeuglos hergestellt werden. Zur Herstellung der Verbindung sind keine separaten Verbindungselemente, wie Schrauben, Bolzen, Nieten, Kabelbinder, Rohrschellen oder dergleichen erforderlich oder vorhanden. Die beiden an der jeweiligen Verbindungsstelle miteinander befestigten Abdeckungsteile sind kraftschlüssig und/oder formschlüssig unmittelbar miteinander verbunden. Die Verbindung der Abdeckungsteile an jeder Verbindungsstelle erfolgt vorzugsweise spaltfrei.

Bei hergestellter Verbindung umgibt die Abdeckung einen elektrisch nicht isolierten Bereich des wenigstens einen Leiters, beispielsweise die Verbindungsstelle zwischen mehreren Leitern, vollständig. Der durch die Abdeckung gegenüber der Umgebung geschützte Längsabschnitt des wenigstens einen Leiters befindet sich zwischen dem ersten Abdeckungsteil und dem zweiten Abdeckungsteil. Mittels der Abdeckung kann somit die Bildung eines Lichtbogens vermieden werden oder ein entstehender Lichtbogen ausreichend schnell gelöscht werden.

Es ist vorteilhaft, wenn wenigstens eines der vorhandenen Abdeckungsteile zumindest an dem der wenigstens einen Verbindungsstelle zugeordneten Teil elastisch verformbar ist. Vorzugsweise führt die elastische Verformung zumindest eines der Abdeckungsteile an der Verbindungsstelle zur Erzeugung der elastischen Vorspannkraft, mit der die beiden Abdeckungsteile an der Verbindungsstelle aneinander anliegen.

Es ist weiterhin bevorzugt, wenn an jeder vorhandenen Verbindungsstelle zwei der Abdeckungsteile unmittelbar miteinander verbunden sind. Eine Zwischenschaltung von weiteren Verbindungsmitteln oder Elementen ist nicht vorgesehen.

Bei einer bevorzugten Ausführungsform hat das eine der beiden Abdeckungsteile an einer Verbindungsstelle eine ringförmige Verbindungsnut. Das jeweils andere Abdeckungsteil hat einen ringförmigen Verbindungsvorsprung. Der ringförmige Verbindungsvorsprung ist dazu eingerichtet, bei hergestellter Verbindung zwischen den beiden Abdeckungsteilen an der Verbindungsstelle in die Verbindungsnut des jeweils anderen Abdeckungsteils einzugreifen. Dabei entsteht zusätzlich zu einer kraftschlüssigen Verbindung auch eine formschlüssige Verbindung. Die Verbindungsnut ist vorzugsweise vom Umfang des Abdeckungsteils nach außen weg offen. Entsprechend ragt der Verbindungsvorsprung des jeweils anderen Abdeckungsteils von einem Umfangsrand nach innen. Die ringförmige Verbindungsnut und/oder der ringförmige Verbindungsvorsprung können eine kreisförmige, elliptische, rechteckförmige, polygonale oder eine andere beliebige Querschnittsform aufweisen. Vorzugsweise hat die Querschnittsform keine Ecken, sondern ist abgerundet. Dadurch lässt sich eine spaltfreie Verbindung einfacher herstellen.

Es ist auch vorteilhaft, wenn wenigstens eines der beiden an einer Verbindungsstelle miteinander verbundenen Abdeckungsteile zur Herstellung und zum Lösen der Verbindung elastisch verformbar ist. Zum Herstellen bzw. Lösen der Verbindung wird somit eines der beiden Abdeckungsteile verformt, beispielsweise aufgeweitet, so dass es auf einen Abschnitt des jeweils anderen Abdeckungsteils aufgebracht oder von diesem heruntergenommen werden kann.

Es ist auch vorteilhaft, wenn zumindest eines der beiden Abdeckungsteile bei hergestellter Verbindung zwischen den beiden Abdeckungsteilen elastisch verformt ist und dadurch eine elastische Vorspannkraft oder Anpresskraft auf das jeweils andere Abdeckungsteil ausübt. Zusätzliche Mittel zur Herstellung der kraftschlüssigen Verbindung sind dadurch nicht erforderlich.

Es ist insbesondere von Vorteil, wenn eine elastische Vorspannkraft oder Anpresskraft zwischen den beiden Abdeckungsteilen an einer Verbindungsstelle in einer Umfangsrichtung um den Längsabschnitt vorzugsweise gleichmäßig über den gesamten Umfang an der Verbindungsstelle wirkt. Beispielsweise kann ein Abdeckungsteil und vorzugsweise der Verbindungsvorsprung bei hergestellter Verbindung aufgeweitet sein und sich in Umfangsrichtung an jeder Umfangsstelle an das andere Abdeckungsteil und vorzugsweise die zugeordnete Verbindungsnut anpressen.

Bei einer Ausführungsform ist es möglich, dass das erste Abdeckungsteil und das zweite Abdeckungsteil zumindest bei gelöster Verbindung an der wenigstens einen Verbindungsstelle entlang des wenigstens einen Leiters relativ zueinander verschiebbar sind. Zum Beispiel kann durch das Verschieben der beiden Abdeckungsteile voneinander weg die Zugänglichkeit zu dem abgedeckten Längsabschnitt des wenigstens einen Leiters ermöglicht werden.

Bei einer Ausführungsform der Abdeckung kann es ausreichen, wenn zwei Abdeckungsteile, nämlich das erste Abdeckungsteil und das zweite Abdeckungsteil vorhanden sind. Beispielsweise können sich hohlzylindrische Abschnitte dieser beiden Abdeckungsteile bei hergestellter Verbindung an der Verbindungsstelle in Längsrichtung in etwa parallel zu dem abdeckbaren Längsabschnitt des wenigstens einen Leiters überlappen und formschlüssig und/oder kraftschlüssig aneinander anliegen.

Bei einem bevorzugten Ausführungsbeispiel sind das erste Abdeckungsteil und das zweite Abdeckungsteil, die die Durchführungsöffnungen aufweisen, mit Abstand zueinander angeordnet. Das erste Abdeckungsteil und das zweite Abdeckungsteil haben dabei keinen unmittelbaren Kontakt miteinander.

Es kann vorteilhaft sein, wenn die Abdeckung ein drittes Abdeckungsteil aufweist. Über das dritte Abdeckungsteil kann beispielsweise der Bereich zwischen dem ersten Abdeckungsteil und dem zweiten Abdeckungsteil abgedeckt werden. Das dritte Abdeckungsteil ist vorzugsweise an einer ersten Verbindungsstelle mit dem ersten Abdeckungsteil und an einer zweiten Verbindungsstelle mit dem zweiten Abdeckungsteil verbunden. Zumindest eine dieser beiden Verbindungsstellen ist lösbar ausgeführt. Die andere Verbindungsstelle kann ebenfalls lösbar oder alternativ unlösbar, beispielsweise stoffschlüssig durch Kleben ausgeführt sein.

Das dritte Abdeckungsteil kann beispielsweise eine schlauchförmige Gestalt aufweisen. Es kann in einer Längsrichtung, in der es sich zwischen dem ersten Abdeckungsteil und dem zweiten Abdeckungsteil erstreckt, faltbar sein und beispielsweise nach Art eines Faltenbalgs ausgestaltet sein. Dem dritte Abdeckungsteil kann durch die Faltenbalggestalt eine gewisse Eigensteifigkeit radial zur Längsrichtung aufweisen und den abzudeckenden Längsabschnitt des wenigstens einen Leiters schlauch- oder rohrförmig umschließen. Beim Lösen der Verbindung an einer Verbindungsstelle kann das dritte Abdeckungsteil in Längsrichtung zusammengeschoben werden.

Es ist vorteilhaft, wenn das dritte Abdeckungsteil zumindest radial zur Längsrichtung elastisch verformbar ist. Bei dieser Ausführung sind das erste Abdeckungsteil und/oder das zweite Abdeckungsteil vorzugsweise als starre Körper ausgeführt. Das erste Abdeckungsteil und/ oder das zweite Abdeckungsteil können beispielsweise als Platte ausgeführt sein, die in etwa rechtwinklig zu der Längsrichtung ausgerichtet sind.

Bei einer Ausführungsform hat das dritte Abdeckungsteil an wenigstens einem seiner beiden in Längsrichtung entgegengesetzten Enden einen Ringwulst. Dieser Ringwulst kann beispielsweise den Verbindungsvorsprung bilden, um an der Verbindungsstelle eine formschlüssige Verbindung mit einer Verbindungsnut an dem jeweils anderen Abdeckungsteil herstellen zu können. Der Ringwulst kann integral ohne Naht- und Fügestelle am dritten Abdeckungsteil ausgebildet sein.

Vorzugsweise sind alle vorhandenen Abdeckungsteile jeweils integral ohne Naht- und Fügestelle aus einem einheitlichen Material hergestellt. Die Abdeckung besteht daher bei einer Ausführungsform aus zwei oder maximal drei Bestandteilen. Alle Abdeckungsteile sind gegenüber den herrschenden elektrischen Spannungen bzw. Strömen isolierend und können beispielsweise aus einem Kunststoff, wie etwa Silikon oder Ethylen-Propylen-Dien-Kautschuk (EPDM) hergestellt sein. Die Abdeckungsteile können auch aus unterschiedlichen Materialien bestehen, beispielsweise kann das dritte Abdeckungsteil aus einem anderen Material hergestellt sein als das erste Abdeckungsteil und/oder das zweite Abdeckungsteil.

Die Abdeckung wird zum Abdecken eines Abschnitts wenigstens eines elektrischen Leiters wie folgt verwendet:

Zunächst wird wenigstens ein erster Leiter durch jeweils eine Durchführungsöffnung des ersten Abdeckungsteils hindurchgeführt. Entsprechend wird wenigstens ein zweiter Leiter durch jeweils eine Durchführungsöffnung des zweiten Abdeckungsteils hindurchgeführt. Der Bereich zwischen dem ersten und dem zweiten Abdeckungsteil soll zur Vermeidung einer Lichtbogenbildung abgedeckt werden. Der wenigstens eine erste Leiter und der wenigstens eine zweite Leiter werden im Bereich zwischen dem ersten Abdeckungsteil und dem zweiten Abdeckungsteil elektrisch miteinander verbunden. Anschließend wird die Abdeckung an der wenigstens einen Verbindungsstelle durch Herstellen der lösbaren kraftschlüssigen und/oder formschlüssigen Verbindung geschlossen. Dies kann beispielsweise durch axiales Verschieben des ersten Abdeckungsteils und des zweiten Abdeckungsteils relativ zueinander erfolgen.

Bei einem weiteren Ausführungsbeispiel kann ein drittes Abdeckungsteil vorhanden sein. Ist ein drittes Abdeckungsteil vorhanden, so wird dieses vorzugsweise vor dem Herstellen der elektrischen Verbindung mit dem ersten Abdeckungsteil oder dem zweiten Abdeckungsteil verbunden. Vorzugsweise wird es dann gemeinsam mit dem betreffenden ersten oder zweiten Abdeckungsteil gehandhabt, so dass das dritte Abdeckungsteil nach dem Durchführen des betreffenden wenigsten einen Leiters durch die wenigstens eine Durchführungsöffnung des ersten oder zweiten Abdeckungsteils in Umfangsrichtung bereits umschließt. Nach dem Herstellen der elektrischen Verbindung kann dann das dritte Abdeckungsteil mit dem noch nicht verbundenen ersten bzw. zweiten Abdeckungsteil verbunden werden.

Vorteilhafte Ausgestaltungen der Erfindung ergeben sich aus den abhängigen Ansprüchen, der Beschreibung sowie den Zeichnungen. Nachfolgend werden Ausführungsbeispiele der Erfindung anhand der beigefügten Zeichnungen im Einzelnen erläutert. Es zeigen:
Fig. 1 eine schematische perspektivische und teilweise geschnittene Darstellung eines Ausführungsbeispiels einer Abdeckung,
Fig. 2 ein erstes Abdeckungsteil der Abdeckung aus Fig. 1 in einer perspektivischen Darstellung,
Fig. 3 das erste Abdeckungsteil aus Fig. 2 in einem Querschnitt gemäß der Schnittlinie III-III in Fig. 2,
Fig. 4 ein zweites Abdeckungsteil der Abdeckung aus Fig. 1 in einer perspektivischen Darstellung,
Fig. 5 das zweite Abdeckungsteil aus Fig. 4 in einem Querschnitt gemäß Schnittlinie V-V in Fig. 4,
Fig. 6 eine schematische Prinzipdarstellung einer verbleibenden Spaltöffnung zwischen wenigstens einem Leiter und einer Durchführungsöffnung,
Fig. 7 eine schematische, geschnittene Teildarstellung der Abdeckungsteile der Abdeckung aus Fig. 1 und
Fig. 8 ein abgewandeltes Ausführungsbeispiel einer Abdeckung in schematischer Querschnittsdarstellung.

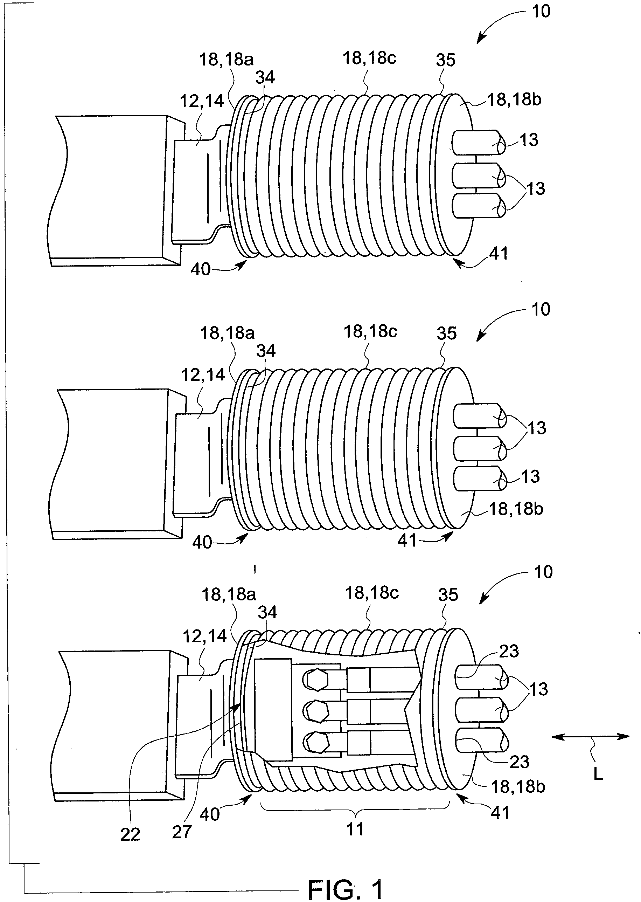

In Fig. 1 ist ein Ausführungsbeispiel einer Abdeckung 10 für einen Längsabschnitt 11 wenigstens eines elektrischen Leiters 12, 13 veranschaulicht. Beim Ausführungsbeispiel ist wenigstens ein elektrischer erster Leiter 12 und wenigstens ein elektrischer zweiter Leiter 13 zur Leitung eines elektrischen Stromes vorhanden. Im Bereich des Längsabschnitts 11 ist der wenigstens eine erste Leiter 12 mit dem wenigstens einen zweiten Leiter 13 elektrisch verbunden. Bei dem dargestellten Ausführungsbeispiel sind die Leiter 12, 13 im Bereich des Längsabschnitts 11 elektrisch leitend miteinander verschraubt. Die elektrisch leitende Verbindung zwischen dem wenigstens einen ersten Leiter 12 und dem wenigstens einen zweiten Leiter 13 kann auf beliebige bekannte Weise hergestellt werden.

Als elektrischer Leiter 12, 13 kann eine elektrisch leitende Stromschiene, beispielsweise Busschiene, ein Draht, ein elektrisches Kabel usw. verwendet werden.

Der Längsabschnitt 11 der Leiter 12, 13, der durch die Abdeckung 10 abgedeckt wird, erstreckt sich in einer Längsrichtung L, wie es schematisch in Fig. 1 gezeigt ist.

Bei dem hier beschriebenen Ausführungsbeispiel ist sowohl der erste Leiter 12, als auch der zweite Leiter 13 außerhalb des von der Abdeckung 10 abgedeckten bzw. abdeckbaren Längsabschnitts 11 mit einer elektrisch isolierenden Ummantelung versehen. Im Bereich der elektrischen Verbindung sind der wenigstens eine erste Leiter 12 und der wenigstens eine zweite Leiter 13 nicht isoliert, um die elektrische Verbindung zwischen den Leitern 12, 13 herstellen zu können. Die Abdeckung 10 ist dazu eingerichtet, die Ausbildung eines Lichtbogens zwischen einem der elektrisch nicht isolierten Teile innerhalb des Längsabschnittes 11 mit einem benachbarten elektrisch leitfähigen Bauteil zu vermeiden. Beispielsweise können mehrere Leiter 12, 13 bzw. Verbindungsstellen unterschiedlicher elektrischer Potenziale benachbart angeordnet sein, wie es in Fig. 1 schematisch gezeigt ist. Die gezeigten ersten Leiter 12 können jeweils einen Anschluss 14 eines mehrphasigen Wandlers darstellen. An jeden Anschluss 14 ist jeweils wenigstens ein zweiter Leiter 13 elektrisch angeschlossen. Durch die Verwendung der Abdeckungen 10 wird eine Lichtbogenbildung zwischen den benachbarten Leitern 12, 13 bzw. Anschlüssen 14 verhindert.

Die Abdeckung 10 ist mehrteilig ausgeführt und besteht aus zwei oder mehr Abdeckungsteilen 18. Bei dem Ausführungsbeispiel gemäß der Figuren 1 bis 7 weist die Abdeckung 10 ein erstes Abdeckungsteil 18a, ein zweites Abdeckungsteil 18b und ein drittes Abdeckungsteil 18c auf. Bevorzugt besteht die Abdeckung 10 nur aus den zwei oder mehreren Abdeckungsteilen 18. Zusätzliche Komponenten können entfallen. Dementsprechend besteht die Abdeckung 10 gemäß dem ersten Ausführungsbeispiel der Figuren 1 bis 7 lediglich aus dem ersten Abdeckungsteil 18a, dem zweiten Abdeckungsteil 18b und dem dritten Abdeckungsteil 18c.

Sämtliche Abdeckungsteile 18 sind beispielsgemäß jeweils integral ohne Naht- und Fügestelle aus einem einheitlichen Material hergestellt. Die Abdeckungsteile 18 bestehen aus elektrisch isolierendem Material. Sie leiten daher die an den elektrischen Leitern 12, 13 anliegenden Spannungen und Ströme nicht. Bevorzugt können die Abdeckungsteile 18 aus einem Kunststoff hergestellt sein und beispielsweise aus Silikon oder Ethylen-Propylen-Dien-Kautschuk (EPDM) bestehen. Alle Abdeckungsteile 18 einer Abdeckung 10 können aus demselben Material hergestellt sein. Es ist auch möglich, für die Abdeckungsteile 18 jeweils unterschiedliche Materialien zu verwenden.

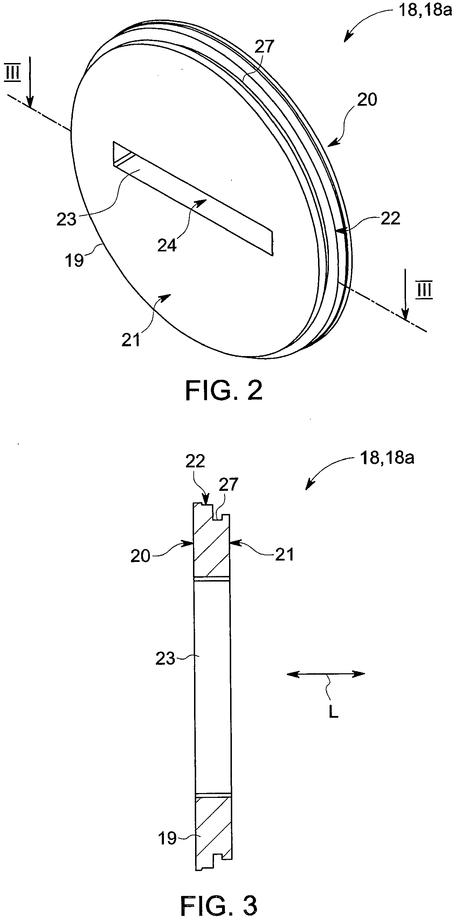

In den Figuren 2 und 3 ist ein Ausführungsbeispiel eines ersten Abdeckungsteils 18a in der Abdeckung 10 veranschaulicht. Das erste Abdeckungsteil 18a ist als plattenförmiger Körper 19 ausgeführt. Der plattenförmige Körper 19 hat beispielsgemäß eine äußere Seite 20 und eine innere Seite 21. Die äußere Seite 20 und die innere Seite 21 können durch parallel zueinander ausgerichtete Flächen gebildet sein. Über eine Umfangsseite 22 sind die äußere Seite 20 und die innere Seite 21 miteinander verbunden. Die Umfangsseite 22 verläuft ringförmig geschlossen um die Längsrichtung L herum. Beim Ausführungsbeispiel hat die Umfangsseite 22 eine kreisringförmige Kontur. In Abwandlung hierzu könnte die Umfangsseite 22 auch elliptisch oder polygonal ausgeführt sein. Bevorzugt ist ein stufenloser und/oder kantenloser Verlauf der Umfangsseite 22 in Umfangsrichtung U um die Längsrichtung L betrachtet. Dieser Verlauf der Umfangsseite 22 in Umfangsrichtung U kann abschnittsweise gekrümmt und/oder gerade sein.

Das erste Abdeckungsteil 18a wird von wenigstens einer Durchführungsöffnung 23 in Längsrichtung L vollständig durchsetzt. Die wenigstens eine Durchführungsöffnung 23 erstreckt sich zwischen der äußeren Seiten 20 und der inneren Seite 21 und hat vorzugsweise einen konstanten Querschnitt. Die wenigstens eine Durchführungsöffnung 23 ist zur Aufnahme des wenigstens einen ersten Leiters 12 eingerichtet. Der wenigstens eine erste Leiter 12 kann durch jeweils eine Durchführungsöffnung 23 des ersten Abdeckungsteils 18a vollständig hindurchgeführt werden. Jede der vorhandenen Durchführungsöffnungen 23 wird durch jeweils eine Umrandungswand 24 begrenzt. Die Anzahl der Durchführungsöffnungen 23 variiert abhängig von der Anzahl der durchzuführenden ersten Leiter 12. Beispielsgemäß hat das erste Abdeckungsteil 18a eine einzige Durchführungsöffnung für einen einzigen, den Anschluss 14 bildenden ersten Leiter 12.

Die Kontur der Durchführungsöffnung 23 bzw. der Umrandungswand 24 entspricht dabei im Wesentlichen der Außenkontur des ersten Leiters 12. Bei dem hier dargestellten Ausführungsbeispiel ist der erste Leiter 12 einschließlich seiner isolierenden Ummantelung im Querschnitt rechteckförmig konturiert. Dementsprechend ist auch die Querschnittsfläche der Durchführungsöffnung 23 im ersten Abdeckungsteil 18a rechteckförmig.

An der Umfangsseite 22 des ersten Abdeckungsteils 18a ist eine Verbindungsnut 27 eingebracht. Die Verbindungsnut 27 hat bei dem hier veranschaulichten Ausführungsbeispiel einen rechteckförmigen Querschnitt, kann jedoch auch einen rinnenförmigen Querschnitt mit konvex nach innen gewölbtem Nutgrund oder einen beliebigen anderen Querschnitt aufweisen. Wie insbesondere in Fig. 3 zu erkennen ist, ist der Durchmesser des ersten Abdeckungsteils 18a bzw. der Umfangsseite 22 zwischen der Verbindungsnut 27 und der äußeren Seite 20 größer als zwischen der Verbindungsnut 27 und der inneren Seite 21.

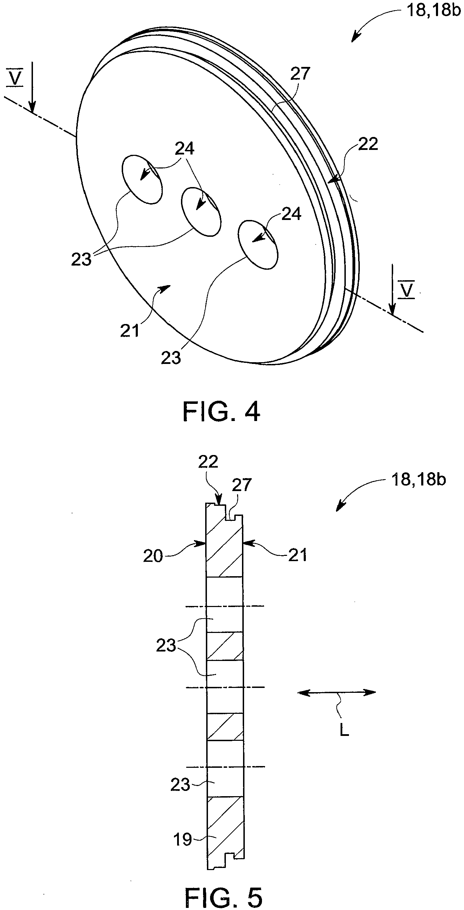

In den Figuren 4 und 5 ist ein Ausführungsbeispiel des zweiten Abdeckungsteils 18b der Abdeckung 10 veranschaulicht. Das zweite Abdeckungsteil 18b entspricht im Wesentlichen dem ersten Abdeckungsteil 18a gemäß der Figuren 2 und 3. Insoweit kann auf die vorstehende Beschreibung verwiesen werden. Der Unterschied des zweiten Abdeckungsteils 18b gegenüber dem ersten Abdeckungsteil 18a besteht in der Anzahl und der Form der Durchführungsöffnungen 23. Beispielsgemäß sind im zweiten Abdeckungsteil 18b für die drei zweiten Leiter 13 entsprechend drei Durchführungsöffnungen 23 vorgesehen. Die Durchführungsöffnungen 23 haben angepasst an die Querschnittskontur des jeweiligen zweiten Leiters 13 eine kreisrunde Gestalt. Die jeweils eine Durchführungsöffnung 23 begrenzende Umrandungswand 24 hat hier somit die Form einer Zylindermantelfläche.

Allgemein können die Durchführungsöffnungen 23 und mithin die Umrandungswände 24 eine beliebige Form aufweisen, die dem jeweils durchgeführten Leiter 12, 13 entspricht. In einem Abdeckungsteil 18a, 18b können eine oder mehrere Durchführungsöffnungen 23 vorhanden sein. Es ist auch möglich, dass mehrere Durchführungsöffnungen 23 in einem Abdeckungsteil 18a, 18b unterschiedliche Konturen aufweisen.

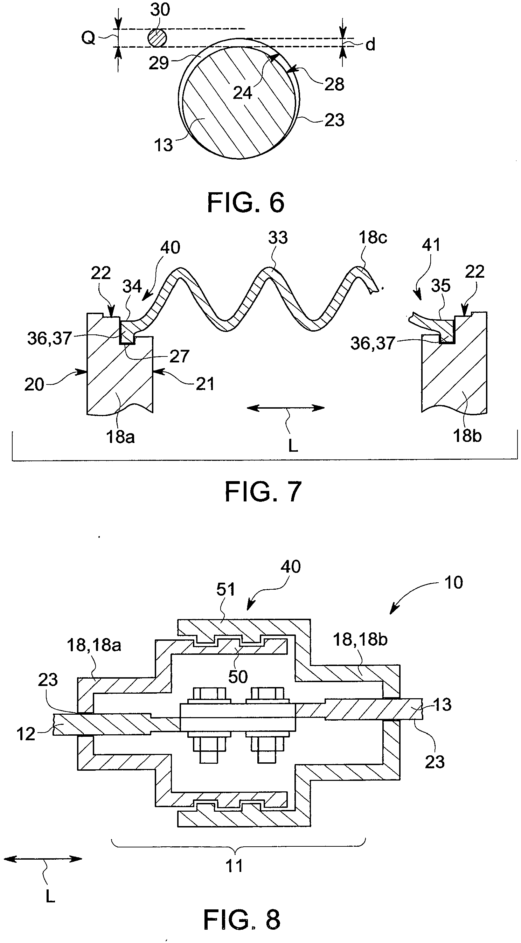

Die Anpassung der jeweiligen Durchführungsöffnung 23 an den durchgeführten elektrischen Leiter 12 bzw. 13 ist derart, dass zwischen der Umrandungswand 24 und einer Außenfläche 28 des jeweils durchgeführten elektrischen Leiters 12 bzw. 13 entweder keine oder eine Spaltöffnung 29 verbleibt, deren maximale Abmessung d, rechtwinklig zur Umrandungswand 24 an der betrachteten Umfangsstelle gemessen, kleiner ist oder höchstens so groß wie ein vorgegebenes Querschnittsprofil 30. Das vorgegebene Querschnittsprofil 30 ist beispielsweise das Querschnittsprofil eines Zünddrahtes gemäß einer genormten Sicherheitsprüfung. Das vorgegebene Querschnittsprofil kann kreisrund sein. Die Situation ist stark schematisiert in Fig. 6 veranschaulicht. Die Abmessung und beispielsgemäß der Durchmesser Q des vorgegebenen Querschnittsprofils 30 ist wie veranschaulicht größer als die maximale Abmessung d der Spaltöffnung 29. Dadurch ist sichergestellt, dass kein elektrisch leitfähiger Gegenstand, der zumindest eine Querschnittsfläche aufweist wie das vorgegebene Querschnittsprofil 30, durch die Spaltöffnung 29 in den Innenbereich der Abdeckung 10 gelangen kann, um einen Lichtbogen außerhalb des durch die Abdeckung geschützten Bereichs (Längsabschnitt 11) zu verursachen. Fig. 6 zeigt die Verhältnisse anhand einer kreisrunden Durchführungsöffnung 23, wie sie beispielgemäß im zweiten Abdeckungsteil 18b vorhanden ist. Dasselbe Prinzip gilt auch für die rechteckförmige Durchführungsöffnung 23 im ersten Abdeckungsteil 18a oder andere Formen von Durchführungsöffnungen 23.

Wie in Fig. 1 veranschaulicht ist, haben das erste Abdeckungsteil 18a und das zweite Abdeckungsteil 18b in Längsrichtung L einen Abstand und begrenzen im Bereich dazwischen den Längsabschnitt 11, der durch die Abdeckung 10 vollständig umgeben und dadurch geschützt werden kann. Das dritte Abdeckungsteil 18c hat beim Ausführungsbeispiel die Form eines Schlauches und insbesondere eines Schlauches mit einer gewellten oder faltbaren Schlauchwand 33. Die Schlauchwand 33 ist beispielsgemäß ziehharmonikaartig gefaltet. Das dritte Abdeckungsteil 18c kann daher auch als Faltenbalg bezeichnet werden. Die Schlauchwand 33 ist in Umfangsrichtung U um die Längsrichtung L vollständig geschlossen. An ihren beiden Längsenden 34, 35 bildet die Schlauchwand 33 und mithin das dritte Abdeckungsteil 18c jeweils eine Öffnung, die beim Ausführungsbeispiel kreisrund ist.

An jedem Längsende 34, 35 weist das dritte Abdeckungsteil 18c außerdem einen Verbindungsvorsprung 36 auf, der in Umfangsrichtung U um die Längsachse L ringförmig geschlossen sein kann. Der Verbindungsvorsprung 36 ist dazu eingerichtet, in die Verbindungsnut 27 am ersten Abdeckungsteil 18a bzw. am zweiten Abdeckungsteil 18b eingesetzt zu werden, um eine zerstörungsfreie lösbare und wiederherstellbare formschlüssige und beispielsgemäß zusätzlich kraftschlüssige Verbindung herzustellen. Die hergestellte Verbindung ist schematisch in Fig. 7 veranschaulicht. Der Verbindungsvorsprung 36 ist dort durch jeweils einen Ringwulst 37 gebildet, der integral mit der Schlauchwand 33 und mithin dem dritten Abdeckungsteil 18c ausgeführt ist.

Wenigstens eines der Abdeckungsteile 18 ist elastisch verformbar. Bei dem hier beschriebenen Ausführungsbeispiel sind das erste Abdeckungsteil 18a und das zweite Abdeckungsteil 18b wesentlich steifer bzw. weniger elastisch als das dritte Abdeckungsteil 18c. Das erste Abdeckungsteil 18a und das zweite Abdeckungsteil 18b können bei den hier auftretenden Kräften im Wesentlichen starr sein. Das dritte Abdeckungsteil 18c ist nach Art eines elastischen Schlauches bzw. Faltenbalgs ausgestaltet und kann in Längsrichtung L gefaltet oder verformt und rechtwinklig bzw. radial zur Längsrichtung L aus seinem Ausgangszustand elastisch aufgeweitet werden.

Beim Ausführungsbeispiel wird an einer ersten Verbindungsstelle 40 eine zerstörungsfrei lösbare und wiederherstellbare kraftschlüssige und formschlüssige Verbindung zwischen dem dritten Abdeckungsteil 18c und dem ersten Abdeckungsteil 18a hergestellt. An einer zweiten Verbindungsstelle 41 wird eine zerstörungsfreie lösbare und wiederherstellbare kraftschlüssige und formschlüssige Verbindung zwischen dem dritten Abdeckungsteil 18c und dem zweiten Abdeckungsteil 18b hergestellt. Bei hergestellter Verbindung greift jeweils ein Verbindungsvorsprung 36 am Längsende 34 bzw. 35 die jeweils zugeordnete Verbindungsnut 37 des ersten Abdeckungsteils 18a bzw. des zweiten Abdeckungsteils 18b ein, wie es schematisch in Fig. 7 gezeigt ist. In diesem Zustand ist das jeweilige Längsende 34 bzw. 35 des dritten Abdeckungsteils 18c radial zur Längsrichtung L aus seinem Ausgangszustand aufgeweitet und drückt sich daher an das erste Abdeckungsteil 18a bzw. das zweite Abdeckungsteil 18b und beispielsgemäß den Nutgrund der jeweiligen Verbindungsnut 37 an.

Die beiden Abdeckungsteile 18c und 18a bzw. 18c und 18b werden an der jeweiligen Verbindungsstelle 40, 41 unter einer radialen Vorspannkraft gegeneinander gedrückt, wobei die radiale Vorspannkraft durch elastische Verformung wenigstens eines der beiden Abdeckteile und beispielsgemäß des dritten Abdeckteils 18c an der Verbindungsstelle 40, 41 erzeugt wird. Die Andrückkraft zwischen den beiden Abdeckungsteilen 18c und 18a bzw. 18c und 18b an der Verbindungsstelle 40, 41 wirkt in Umfangsrichtung U an jeder Umfangsstelle und ist vorzugsweise an jeder Umfangsstelle gleich groß.

Zum Lösen der Verbindung an der ersten Verbindungsstelle 40 bzw. der zweiten Verbindungsstelle 41 kann das jeweilige Längsende 34 des dritten Abdeckungsteils 18c aufgeweitet und der Verbindungsvorsprung 36 aus der Verbindungsnut 27 entfernt werden. Das in Längsrichtung L verformbare bzw. faltbare dritte Abdeckungsteil 18c kann dann soweit vom betreffenden Abdeckungsteil 18a bzw. 18b weg geschoben werden, dass der Längsabschnitt 11 zumindest teilweise zugänglich ist und beispielsweise die elektrische Verbindung zwischen dem wenigstens einen ersten Leiter 12 und dem wenigstens einen zweiten Leiter 13 gelöst werden kann.

Die Abdeckung 10 gemäß dem Ausführungsbeispiel der Figuren 1 bis 7 wird zum Abdecken bzw. Isolieren des Längsabschnitts 11 wie folgt verwendet:

Zuerst wird das erste Abdeckungsteil 18a vom freien Ende her auf den wenigstens einen ersten Leiter 12 aufgesteckt. Analog hierzu wird das zweite Abdeckungsteil 18b vom jeweils freien Ende her auf den wenigstens einen zweiten Leiter 13 aufgesteckt. Das dritte Abdeckungsteil 18c kann ebenfalls über das freie Ende entweder des wenigstens einen ersten Leiters 12 oder des wenigstens einen zweiten Leiters 13 aufgesetzt werden, so dass es den betreffenden Leiter 12 bzw. 13 in Umfangsrichtung U um die Längsrichtung L umschließt. Es ist alternativ hierzu auch möglich, das dritte Abdeckungsteil 18c zu Beginn mit entweder dem ersten Abdeckungsteil 18a oder dem zweiten Abdeckungsteil 18b zu verbinden und beim Aufstecken des betreffenden ersten oder zweiten Abdeckungsteils 18a bzw. 18b auf den jeweiligen wenigstens einen Leiter 12 bzw. 13 gleichzeitig auch das dritte Abdeckungsteil 18c um das freie Ende des betreffenden Leiters 12 bzw. 13 anzuordnen.

Nachdem alle drei Abdeckungsteile 18a, 18b, 18c positioniert sind, wird die elektrische Verbindung zwischen dem wenigstens einen ersten Leiter 12 und dem wenigstens einen zweiten Leiter 13 im Bereich des Längsabschnitts 11 hergestellt, beispielsweise durch eine elektrisch leitende Schraubverbindung. Im Anschluss daran wird das dritte Abdeckungsteil 18c wie in Fig. 1 veranschaulicht an beiden Verbindungsstellen 40, 41 oder der noch verbleibenden Verbindungsstelle 40 oder 41 lösbar mit dem jeweils zugeordneten Abdeckungsteil 18a bzw. 18b verbunden.

Aufgrund der an wenigstens einer Verbindungsstelle lösbaren Verbindung zwischen Abdeckungsteilen 18 der Abdeckung 10 ist die elektrische Verbindung zwischen den Leitern 12, 13 zugänglich und ist für Wartungs- oder Instandsetzungsarbeiten einfach zugänglich. Außerdem ist bei geschlossener Abdeckung, also bei hergestellter Verbindung, eine Lichtbogenbildung vermieden. Benachbarte Anschlüsse 14 eines Wandlers oder andere elektrisch leitfähige Komponenten oder Bauelemente können daher relativ nahe an dem durch die Abdeckung 10 geschützten Längsabschnitt 11 des wenigstens einen Leiters 12 bzw. 13 angeordnet werden, was den Bauraum für eine elektrische Anlage wesentlich reduziert.

In Fig. 8 ist ein weiteres Ausführungsbeispiel für die Abdeckung 10 veranschaulicht. Die Abdeckung 10 gemäß Fig. 8 besteht lediglich aus dem ersten Abdeckungsteil 18a und dem zweiten Abdeckungsteil 18b. Diese sind an einer einzigen Verbindungsstelle lösbar kraftschlüssig und formschlüssig miteinander verbunden, die als erste Verbindungsstelle 40 bezeichnet ist. Hierzu weisen die beiden Abdeckungsteile 18a und 18b jeweils einen hohlzylindrischen Abschnitt auf, wobei der eine hohlzylindrische Abschnitt des ersten Abdeckungsteils 18a einen inneren hohlzylindrischen Abschnitt 50 und der hohlzylindrische Abschnitt des zweiten Abdeckungsteils 18b einen äußeren hohlzylindrischen Abschnitt 51 bildet. Die beiden hohlzylindrischen Abschnitte 50, 51 überlappen sich in Längsrichtung L an der Verbindungsstelle 40. Dort liegen sie kraftschlüssig und/oder formschlüssig mit den einander zugewandten Seiten aneinander an und schließen dadurch den Längsabschnitt 11 gegenüber der Umgebung so ab, dass kein Lichtbogen aus dem Inneren der Abdeckung 10 nach außen gelangen kann.

Wie in Fig. 8 schematisch veranschaulicht ist, können dabei an den einander zugewandten Seiten wenigstens einen Verbindungsvorsprung 37 bzw. wenigstens eine Verbindungsnut 27 vorhanden sein, so dass der Spalt zwischen den beiden hohlzylindrischen Abschnitten 50, 51 nach Art eines Labyrinths ausgeführt ist.

Zum Lösen der Verbindung an der Verbindungsstelle 40 wird zumindest eines der beiden Abdeckungsteile 18a bzw. 18b rechtwinklig oder schräg zur Längsrichtung L verformt, so dass der wenigstens einen Verbindungsvorsprung 37 und die jeweils zugeordnete wenigstens eine Verbindungsnut 27 der beiden hohlzylindrischen Abschnitte 50, 51 außer Eingriff gelangen und die beiden hohlzylindrischen Abschnitte 50, 51 in Längsrichtung L relativ zueinander verschoben werden können. Auf diese Weise ist der bei hergestellter Verbindung umschlossene Längsabschnitt 11 beispielsgemäß die elektrische Verbindung zwischen dem wenigstens einen ersten Leiter 12 und dem wenigstens einen zweiten Leiter 13 zugänglich.

Es versteht sich, dass bei sämtlichen Ausführungsbeispielen an einer jeweiligen Verbindungsstelle 40, 41 anders als bei den bevorzugten Ausführungsbeispielen auch lediglich eine kraftschlüssige oder eine formschlüssige Verbindung hergestellt werden könnte. Bevorzugt ist die Verbindung sowohl kraftschlüssig, als auch formschlüssig.

Bei dem hier beschriebenen Ausführungsbeispiel gemäß der Figuren 1 bis 7 ist sowohl an der ersten Verbindungsstelle 40, als auch in der zweiten Verbindungsstelle 41 eine lösbare und wiederherstellbare Verbindung zwischen dem dritten Abdeckungsteil 18c und dem betreffenden ersten Abdeckungsteil 18a bzw. zweiten Abdeckungsteil 18b vorgesehen. An einer Verbindungsstelle 40 oder 41 könnte auch eine nicht zerstörungsfrei lösbare Verbindung, beispielsweise eine stoffschlüssige Verbindung, vorgesehen sein. Es ist ausreichend, wenn die Abdeckung 10 eine einzige Verbindungsstelle 40 oder 41 mit einer zerstörungsfrei lösbaren und wiederherstellbaren Verbindung vorsieht.

Die Erfindung betrifft eine Abdeckung 10, um einen Längsabschnitt 11 wenigstens eines elektrischen Leiters 12, 13 zu umschließen und die Bildung eines Lichtbogens bzw. eines Überschlags zu vermeiden. Die Abdeckung 10 weist wenigstens zwei Abdeckungsteile 18 auf, die aus einem elektrisch isolierenden Material bestehen. Ein erstes Abdeckungsteil 18a und ein zweites Abdeckungsteil 18b haben jeweils wenigstens eine Durchführungsöffnung 23. Durch jede Durchführungsöffnung 23 wird ein elektrischer Leiter 12, 13 hindurchgeführt, so dass keine oder lediglich eine geringe Spaltöffnung 29 zwischen der Außenfläche 28 des Leiters 12, 13 und einer Umrandungswand 24 der Durchführungsöffnung 23 verbleibt. Die Abdeckung 10 hat außerdem wenigstens eine Verbindungsstelle 40, 41. An dieser Verbindungsstelle liegen zwei der vorhandenen Abdeckungsteile 18a, 18b bzw. 18a, 18c bzw. 18a, 18b kraftschlüssig und/oder formschlüssig aneinander an und bilden eine zerstörungsfrei lösbare Verbindung. Dadurch ist die Zugänglichkeit zu dem geschützten Längsabschnitt 11 gewährleistet.

### Bezugszeichenliste:

- 10: Abdeckung
- 11: Längsabschnitt
- 12: erster Leiter
- 13: zweiter Leiter
- 14: Anschluss

- 18: Abdeckungsteil
- 18a: erstes Abdeckungsteil
- 18b: zweites Abdeckungsteil
- 18c: drittes Abdeckungsteil
- 19: plattenförmiger Körper
- 20: äußere Seite
- 21: innere Seite
- 22: Umfangsseite
- 23: Durchführungsöffnung
- 24: Umrandungswand

- 27: Verbindungsnut
- 28: Außenfläche des Leiters
- 29: Spaltöffnung
- 30: Querschnittsprofil

- 33: Schlauchwand
- 34: Längsende
- 35: Längsende
- 36: Verbindungsvorsprung
- 37: Ringwulst

- 40: erste Verbindungsstelle
- 41: zweite Verbindungsstelle

- 50: innerer hohlzylindrischer Abschnitt
- 51: äußerer hohlzylindrischer Abschnitt

- d: Abmessung der Spaltöffnung
- L: Längsrichtung
- Q: Abmessung des Querschnittsprofils
- U: Umfangsrichtung

## Patentansprüche

1. Abdeckung (10) für wenigstens einen elektrischen Leiter (12, 13),
mit wenigstens zwei Abdeckungsteilen (18a, 18b, 18c) aus einem elektrisch isolierenden Material,
wobei ein erstes Abdeckungsteil (18a) und ein zweites Abdeckungsteil (18b) wenigstens eine Durchführungsöffnung (23) zur Durchführung jeweils eines von den vorhandenen elektrischen Leitern (12, 13) aufweist,
wobei zwischen einer Umrandungswand (24) der jeweiligen Durchführungsöffnung (23) und der Außenfläche (28) des jeweils durchgeführten elektrischen Leiters (12, 13) an keiner Umfangsstelle eine Spaltöffnung (29) verbleibt, deren Abmessung größer ist als ein vorgegebenes Querschnittsprofil (30),
wobei die Abdeckung (10) wenigstens eine Verbindungsstelle (40, 41) aufweist, an der zwei der vorhandenen Abdeckungsteile (18a, 18c; 18b; 18c; 18a, 18b) ohne Verwendung separaten Verbindungselemente lösbar kraftschlüssig und/oder formschlüssig miteinander verbunden sind,
und wobei die Abdeckung (10) bei hergestellter Verbindung zwischen den Abdeckungsteilen (18a, 18c; 18b; 18c; 18a, 18b) einen Abschnitt des wenigstens einen Leiters (12, 13) vollständig umgibt.

2. Abdeckung nach Anspruch 1,
**dadurch gekennzeichnet, dass** wenigstens eines der vorhandenen Abdeckungsteile (18a, 18b, 18c) elastisch verformbar ist.

3. Abdeckung nach Anspruch 1 oder 2,
**dadurch gekennzeichnet, dass** an jeder vorhandenen Verbindungsstelle (40, 41) zwei der Abdeckungsteile (18a, 18c; 18b; 18c; 18a, 18b) unmittelbar miteinander verbunden sind.

4. Abdeckung nach Anspruch 2,
**dadurch gekennzeichnet, dass** das eine der beiden Abdeckungsteile (18a, 18b) eine ringförmige Verbindungsnut (27) und das jeweils andere Abdeckungsteil (18c) einen ringförmigen Verbindungsvorsprung (36) aufweist, der bei hergestellter Verbindung zwischen den beiden Abdeckungsteilen (18a, 18c; 18b; 18c; 18a, 18b) in die Verbindungsnut (27) eingreift.

5. Abdeckung nach Anspruch 2 oder 3,
**dadurch gekennzeichnet, dass** wenigstens eines der beiden an einer Verbindungsstelle (40, 41) miteinander verbundenen Abdeckungsteile (18c) zur Herstellung und zum Lösen der Verbindung elastisch verformbar ist.

6. Abdeckung nach einem der Ansprüche 2 bis 5,
**dadurch gekennzeichnet, dass** zumindest eines der beiden Abdeckungsteile (18a, 18b, 18c) bei hergestellter Verbindung zwischen den beiden Abdeckungsteilen (18a, 18c; 18b; 18c; 18a, 18b) elastisch verformt ist und dadurch mit einer Vorspannkraft am jeweils anderen Abdeckungsteil (18a, 18b, 18c) anliegt.

7. Abdeckung nach einem der vorhergehenden Ansprüche,
**dadurch gekennzeichnet, dass** das erste Abdeckungsteil (18a) und das zweite Abdeckungsteil (18b) zumindest bei gelöster Verbindung an der wenigstens einen Verbindungsstelle (40, 41) entlang des wenigstens einen Leiters (12, 13) relativ zueinander verschiebbar sind.

8. Abdeckung nach einem der vorhergehenden Ansprüche,
**dadurch gekennzeichnet, dass** nur das erste Abdeckungsteil (18a) und das zweite Abdeckungsteil (18b) vorhanden sind und an einer Verbindungsstelle (40) miteinander verbunden sind.

9. Abdeckung nach einem der Ansprüche 1 bis 7,
**dadurch gekennzeichnet, dass** das erste Abdeckungsteil (18a) und das zweite Abdeckungsteil (18b) mit Abstand zueinander angeordnet sind.

10. Abdeckung nach einem der vorhergehenden Ansprüche,
**dadurch gekennzeichnet, dass** die Abdeckung (10) ein drittes Abdeckungsteil (18c) aufweist, das an einer ersten Verbindungsstelle (40) mit dem ersten Abdeckungsteil (10) und an einer zweiten Verbindungsstelle (41) mit dem zweiten Abdeckungsteil (18b) verbunden ist.

11. Abdeckung nach Anspruch 10,
**dadurch gekennzeichnet, dass** das dritte Abdeckungsteil (18c) eine schlauchförmige Gestalt aufweist.

12. Abdeckung nach Anspruch 10 oder 11,
**dadurch gekennzeichnet, dass** das dritte Abdeckungsteil (18c) elastisch verformbar ist, und dass das erste Abdeckungsteil (18a) und/oder das zweite Abdeckungsteil (18b) als starre Körper (19) ausgeführt sind.

13. Abdeckung nach einem der Ansprüche 10 bis 12,
**dadurch gekennzeichnet, dass** das dritte Abdeckungsteil (18c) an wenigstens einem seiner beiden entgegengesetzten Enden (34, 35), die jeweils einer der beiden Verbindungsstellen (40, 41) zugeordnet sind, einen Ringwulst (37) aufweist, der bei hergestellter Verbindung in eine Verbindungsnut (27) an dem ersten Abdeckungsteil (18a) bzw. zweiten Abdeckungsteil (18b) eingreift.

14. Abdeckung nach einem der vorhergehenden Ansprüche,
**dadurch gekennzeichnet, dass** wenigstens eines oder alle Abdeckungsteile (18a, 18b, 18c) jeweils integral aus einem einheitlichen Material hergestellt sind.

15. Verfahren zur Abdeckung eines Abschnitts (11) wenigstens eines elektrischen Leiters (12, 13) unter Verwendung einer Abdeckung (10) nach einem der vorhergehenden Ansprüche, mit folgenden Schritten:
- Durchführen wenigstens eines ersten Leiters (12) durch jeweils eine Durchführungsöffnung (23) des ersten Abdeckungsteils (18a),
- Durchführen wenigstens eines zweiten Leiters (13) durch jeweils eine Durchführungsöffnung (23) des zweiten Abdeckungsteils (18b),
- Herstellen einer elektrischen Verbindung zwischen dem wenigstens einen ersten Leiter (12) und dem wenigstens einen zweiten Leiter (13),
- Herstellen einer lösbaren kraftschlüssigen und/oder formschlüssigen Verbindung der vorhandenen Abdeckungsteile (18a, 18c; 18b; 18c; 18a, 18b) an wenigstens einer Verbindungsstelle (40, 41) ohne Verwendung separater Verbindungselemente.
